# EUROPEAN PATENT SPECIFICATION

(11) **EP 4 213 254 B1**
(45) Date of publication and mention of the grant of the patent: **25.02.2026**
(21) Application number: 23150365.7
(22) Date of filing: 04.01.2023
(51) Int. Cl.: H01M 8/248

(54) **RODS FOR FUEL CELL**
NACHGIEBIGE STÄBE FÜR EINE BRENNSTOFFZELLE
TIGES SOUPLES POUR PILE À COMBUSTIBLE

(30) Priority: 06.01.2022 US 202217570080
(43) Date of publication of application: 19.07.2023
(73) Proprietor: Hamilton Sundstrand Corporation, Charlotte, NC 28217-4578 (US)
(72) Inventor: KUCZEK, Andrzej Ernest, Bristol Connecticut 06010 (US); DARLING, Robert Mason, South Windsor Connecticut 06074 (US); RIDGEWAY, Kristoffer, Simsbury Connecticut 06070 (US); DAVENPORT, Timothy, South Windsor Connecticut 06074 (US)
(74) Representative: Dehns

(56) References cited:
- US-B1- 6 190 793
- MORTAZAVIAN SEYYEDVAHID ET AL: "Effects of fiber orientation and anisotropy on tensile strength and elastic modulus of short fiber reinforced polymer composites", SCIENCE DIRECT - COMPOSITES: PART B, 8 December 2014 (2014-12-08), www.elsevier.com/locate/compositesb, pages 1 - 14, XP055821290, Retrieved from the Internet <URL:https://reader.elsevier.com/reader/sd/pii/S1359836814005642?token=33D99D617C4B3C6BDC374E4848DB9D2F34812883D33FC794C8FCDC50105A2369051E18F4CC53431A9F129A54FD4FC5C6&originRegion=eu-west-1&originCreation=20210706052630> [retrieved on 20210706]
- HAO X ET AL: "Effects of fiber geometry and orientation distribution on the anisotropy of mechanical properties, creep behavior, and thermal expansion of natural fiber/HDPE composites", COMPOSITES PART B: ENGINEERING 20200315 ELSEVIER LTD GBR, vol. 185, 15 March 2020 (2020-03-15), XP002809431, DOI: 10.1016/J.COMPOSITESB.2020.107778
- PASTUKHOV L V ET AL: "Influence of fiber orientation, temperature and relative humidity on the long-term performance of short glass fiber reinforced polyamide 6", 15 May 2021, JOURNAL OF APPLIED POLYMER SCIENCE 20210515 JOHN WILEY AND SONS INC USA, VOL. 138, NR. 19, XP002809432
- KUMAR A L [0000-0002-7709-5461] ET AL: "The effect of fiber orientation on mechanical properties and machinability of GFRP composites by end milling using cutting force analysis", 1 November 2021, POLYMERS AND POLYMER COMPOSITES 20211101 SAGE PUBLICATIONS LTD GBR, VOL. 29, NR. 9, SUPPLEMENT, PAGE(S) S178 - S187, XP002809433
- DATABASE COMPENDEX [online] ENGINEERING INFORMATION, INC., NEW YORK, NY, US; 1 February 2021 (2021-02-01), CHANG B ET AL: "Effects of temperature and fiber orientation on the tensile behavior of short carbon fiber reinforced PEEK composites", XP002809422, Database accession no. E20204309371450
- CHANG B ET AL: "Effects of temperature and fiber orientation on the tensile behavior of short carbon fiber reinforced PEEK composites", POLYMER COMPOSITES 20210201 JOHN WILEY AND SONS INC USA, vol. 42, no. 2, 1 February 2021 (2021-02-01), pages 597 - 607, DOI: 10.1002/PC.25850
- DATABASE COMPENDEX [online] ENGINEERING INFORMATION, INC., NEW YORK, NY, US; 1 April 2020 (2020-04-01), ZHU H ET AL: "Fiber distribution of long fiber reinforced polyamide and effect of fiber orientation on mechanical behavior", XP002809423, Database accession no. E20195107854473
- ZHU H ET AL: "Fiber distribution of long fiber reinforced polyamide and effect of fiber orientation on mechanical behavior", POLYMER COMPOSITES 20200401 JOHN WILEY AND SONS INC. USA, vol. 41, no. 4, 1 April 2020 (2020-04-01), pages 1531 - 1550, DOI: 10.1002/PC.25476
- DATABASE COMPENDEX [online] ENGINEERING INFORMATION, INC., NEW YORK, NY, US; 15 March 2020 (2020-03-15), HAO X ET AL: "Effects of fiber geometry and orientation distribution on the anisotropy of mechanical properties, creep behavior, and thermal expansion of natural fiber/HDPE composites", XP002809424, Database accession no. E20200408076312
- HAO X ET AL: "Effects of fiber geometry and orientation distribution on the anisotropy of mechanical properties, creep behavior, and thermal expansion of natural fiber/HDPE composites", COMPOSITES PART B: ENGINEERING 20200315 ELSEVIER LTD GBR, vol. 185, 15 March 2020 (2020-03-15), XP002809431, DOI: 10.1016/J.COMPOSITESB.2020.107778
- TEZVERGIL ARZU ET AL: "The effect of fiber orientation on the thermal expansion coefficients of fiber-reinforced composites", DENTAL MATERIALS, vol. 19, no. 6, 1 September 2003 (2003-09-01), AMSTERDAM, NL, pages 471 - 477, XP093051353, ISSN: 0109-5641, DOI: 10.1016/S0109-5641(02)00092-1
- DATABASE COMPENDEX [online] ENGINEERING INFORMATION, INC., NEW YORK, NY, US; September 2003 (2003-09-01), TEZVERGIL A ET AL: "The effect of fiber orientation on the thermal expansion coefficients of fiber-reinforced composites", XP002809425, Database accession no. E2003327587818
- TEZVERGIL A ET AL: "The effect of fiber orientation on the thermal expansion coefficients of fiber-reinforced composites", DENTAL MATERIALS SEPTEMBER 2003 ELSEVIER INC. US, vol. 19, no. 6, September 2003 (2003-09-01), pages 471 - 477, XP093051353, DOI: 10.1016/S0109-5641(02)00092-1
- DATABASE COMPENDEX [online] ENGINEERING INFORMATION, INC., NEW YORK, NY, US; 1 November 2021 (2021-11-01), KUMAR A L [0000-0002-7709-5461] ET AL: "The effect of fiber orientation on mechanical properties and machinability of GFRP composites by end milling using cutting force analysis", XP002809426, Database accession no. E20210709923772
- KUMAR A L [0000-0002-7709-5461] ET AL: "The effect of fiber orientation on mechanical properties and machinability of GFRP composites by end milling using cutting force analysis", POLYMERS AND POLYMER COMPOSITES 20211101 SAGE PUBLICATIONS LTD GBR, vol. 29, no. 9, Supplement, 1 November 2021 (2021-11-01), pages S178 - S187, XP002809433, DOI: 10.1177/0967391121991289
- DATABASE COMPENDEX [online] ENGINEERING INFORMATION, INC., NEW YORK, NY, US; 15 May 2021 (2021-05-15), PASTUKHOV L V ET AL: "Influence of fiber orientation, temperature and relative humidity on the long-term performance of short glass fiber reinforced polyamide 6", XP002809427, Database accession no. E20205109639343
- PASTUKHOV L V ET AL: "Influence of fiber orientation, temperature and relative humidity on the long-term performance of short glass fiber reinforced polyamide 6", JOURNAL OF APPLIED POLYMER SCIENCE 20210515 JOHN WILEY AND SONS INC USA, vol. 138, no. 19, 15 May 2021 (2021-05-15), XP002809432, DOI: 10.1002/APP.50382

## Description

### TECHNICAL FIELD

The embodiments herein generally relate to fuel cell stack assemblies that are suited for usage in transportation vehicles, portable power plants, or as stationary power plant and more specifically to compliant rods for a fuel cell.

### BACKGROUND

Fuel cells are well-known and are commonly used to produce electrical energy from reducing and oxidizing reactant fluids to power electrical apparatuses such as apparatus on-board space vehicles, transportation vehicles, or as on-site generators for buildings. A plurality of planar fuel cell plate components are typically arranged into a fuel cell stack surrounded by a frame structure. Each individual fuel cell generally includes an anode electrode and a cathode electrode separated by an electrolyte. A reducing fluid such as hydrogen is supplied to the anode electrode, and an oxidant such as oxygen or air is supplied to the cathode electrode. In a cell utilizing a proton exchange membrane ("PEM") as the electrolyte, the hydrogen electrochemically reacts at a catalyst surface of the anode electrode to produce hydrogen ions and electrons. The electrons are conducted to an external load circuit and then returned to the cathode electrode, while the hydrogen ions transfer through the electrolyte to the cathode electrode, where they react with the oxidant and electrons to produce water and release thermal energy.

US 6 190 793 B1 discloses an electrochemical fuel cell stack with a compression assembly comprising a tension member which is electrically non-conductive and preferably non-metallic. The tension member can be made from a composite material which has similar expansion and contraction properties as the stack materials.

### BRIEF SUMMARY

According to one aspect of the invention, a fuel cell assembly is provided as recited in claim 1.

In addition to one or more of the features described above, further embodiments may include that the rod is configured to expand with expansion of the fuel cell stack and contract with contraction of the fuel cell stack.

In addition to one or more of the features described above, or as an alternative, further embodiments may include that the rod is composed of a material that is configured to expand with expansion of the fuel cell stack and contract with contraction of the fuel cell stack.

In addition to one or more of the features described above, or as an alternative, further embodiments may include that the rod is composed of a composite material that includes a plurality of composite fibers.

In addition to one or more of the features described above, or as an alternative, further embodiments may include that the plurality of composite fibers have a braiding angle that is non-perpendicular and non-parallel to a central longitudinal axis of the rod.

In addition to one or more of the features described above, or as an alternative, further embodiments may include that the rod has a passageway formed therein. The connector body is secured to the passageway of the rod.

In addition to one or more of the features described above, or as an alternative, further embodiments may include that the assembly includes: a second connector body secured to the rod at or proximate the second rod end and a second anchoring mechanism secured to the second connector body. The second anchoring mechanism being configured to anchor the second end plate to the fuel cell stack.

According to another aspect of the invention, a method of manufacturing a fuel cell assembly is provided as recited in claim 8.

In addition to one or more of the features described above, further embodiments may include forming the rod from a composite material. The composite material including a plurality of composite fibers having a braiding angle that is non-perpendicular and non-parallel to a central longitudinal axis of the rod.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 is a schematic illustration of a fuel cell assembly with a compliant assembly, according to an embodiment of the present disclosure;
FIG. 2 is an assembled cut-away view of the compliant assembly of FIG. 1, according to an embodiment of the present disclosure;
FIG. 3 is an exploded view of the compliant assembly of FIG. 1, according to an embodiment of the present disclosure;
FIG. 4 is a view of the braiding of a rod of the compliant assembly of FIGS. 1-3, according to an embodiment of the present disclosure; and
FIG. 5 is a flowchart illustrating a method of manufacturing the fuel cell assembly, according to an embodiment of the present disclosure.

### DETAILED DESCRIPTION

A detailed description of one or more embodiments of the disclosed apparatus and method are presented herein by way of exemplification and not limitation with reference to the Figures.

Fuel cell stacks produce electricity from reducing fluid and process oxidant reactant streams, and comprises a plurality of fuel cell component plates stacked adjacent each other to form a reaction portion of the fuel cell stack. The plurality of fuel cell component plates include a first end plate at a first end of the stack of fuel cell component plates, and a second end plate at an opposed second end of the stack of fuel cell component plates. The fuel cell stack is compressed between the first end plate and the second end plate. Conventionally, the first end plate, the second end plate, and the fuel cell stack located between the first end plate and the second end plate are anchored together by tie rods and associated springs, which allow for expansion and contraction of the fuel cell stack. The tie rods and springs are typically composed of a metallic material that is conductive and have to be electrically separated from the fuel cell stack to avoid short circuiting the fuel cell stack.

Further, temperature changes and moisture content in the fuel cell stack may cause expansion and contraction of the fuel cells stack. The metal tie rods typically have high stiffness and there is a difference in the expansion rate of the tie rods and the expansion rate of the fuel cell stacks. The springs are conventionally used to allow for further expansion and contraction of the fuel cell stack than would be allowable by the metal tie rod alone. Additionally, due to creep in the polymeric cell materials and seals, the load decreases over time and the springs may be used to maintain the load. The springs are typically placed outside of the fuel cell stack. More specifically, the springs are typically placed outside of the first end plate and outside the second end plate. The location of the springs typically adds a great deal of space to the overall fuel cell assembly. Further, the tie rods and springs are also typically heavy and add a great deal of weight to the overall fuel cell assembly. The embodiments disclosed herein seek to provide compliant tie rods that are both light-weight and non-conductive to compress the fuel cell together while allowing for expansion and contraction of the fuel cell.

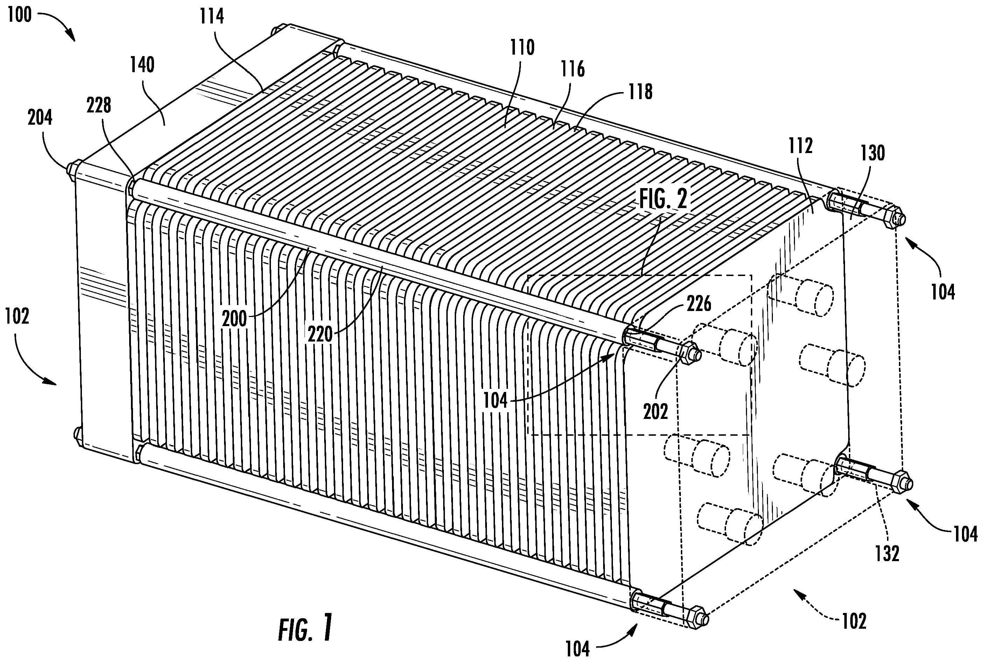

Referring now to FIG. 1, a fuel cell assembly 100 with an assembly (for example a compliant assembly) 200 is illustrated, in accordance with an embodiment of the present disclosure. As shown in FIG. 1 the fuel cell assembly 100 is composed of a fuel cell stack 110, a first end plate 130, a second end plate 140, and a compliant assembly 200.

The fuel cell stack 110 may be composed of a plurality of fuel cell component plates 116 and catalyst coated membranes 118 interposed between the fuel cell component plates 116. The component plates 116 and catalyst coated membranes 118 are separated by porous carbon paper (not shown) that facilitates transport of oxidant and reductant gases. The fuel cell component plates 116 may be composed of graphite. The membranes 118 may be composed of a polymer material with ion-exchange groups. Catalyst layers contain platinum catalyst supported by carbon that are coated with ionomer to enable proton transport. It is understood that while a particular fuel cell stack 110 has been described herein, the embodiments disclosed herein may be applicable to any fuel cell stack known to one of skill in the art.

The fuel cell stack 110 is interposed between the first end cell component plate 130 at a first stack end 112 of the fuel cell stack 110 and the second end plate 140 at a second stack end 114 of the fuel cell stack 110. The second stack end 114 of the fuel cell stack 110 being located opposite the first stack end 112. The first end plate 130 and the second end plate 140 are composed of an insulating or conductive material.

The compliant assembly 200 extending from the first end plate 130 and the second end plate 140. The compliant assembly 200 is configured to anchor together the fuel cell stack 110, the first end plate 130, and the second end plate 140. The compliant assembly 200 includes a rod 220 that extends from a first rod end 226 to a second rod end 228 located opposite the first rod end 226. The first rod end 226 is located proximate or at the first stack end 112 and the second rod end 228 is located proximate or at the second stack end 114. The rod 220 is configured to expand with expansion of the fuel cell stack 110 and contract with contraction of the fuel cell stack 110, as discussed further herein. The rod 220 may be composed of a compliant material that allows for the rod 220 is to expand with expansion of the fuel cell stack 110 and contract with contraction of the fuel cell stack 110, as also discussed further herein.

The compliant assembly 200 extends from a first end 202 to a second end 204 located opposite the first end 202. The first end 202 being located proximate or at the first end plate 130 and the second end 204 being located proximate or at the second end plate 140. The compliant assembly 200 is configured to secure the first end plate 130, the second end plate 140, and the fuel cell stack 110 together with the fuel cell stack 110 interposed between the first end plate 130 and the second end plate 140. The compliant assembly 200 may compress the first end plate 130 and the second end plate 140 together into the fuel cell stack 110. The compression by the compliant assembly 200 secures the fuel cell stack 110 between the first end plate 130 and the second end plate 140. The compliant assembly 200 is configured to provide a constant compression force on the fuel stack 110, the first end plate 130, and the second end plate 140

The fuel cell assembly 100 may be rectangular in shape having square ends 102 as illustrated in FIG. 1. While the fuel cell assembly 100 is illustrated as being rectangular in shape with square ends 102, the embodiments disclosed herein are also applicable to fuel cell assemblies of different shapes, sizes, and number of corners. The square ends 102 of the fuel cell assembly 100 have four corners 104. A compliant assembly 200 may be located at or proximate each of the four corners 104. Therefore, the fuel cell assembly 100 may include four compliant assemblies 200. Based on the shape of the ends of the fuel cell assembly 100 (e.g., number of corners), fewer or more compliant assemblies 200 may be included and two compliant assemblies 200 may be used as a minimum.

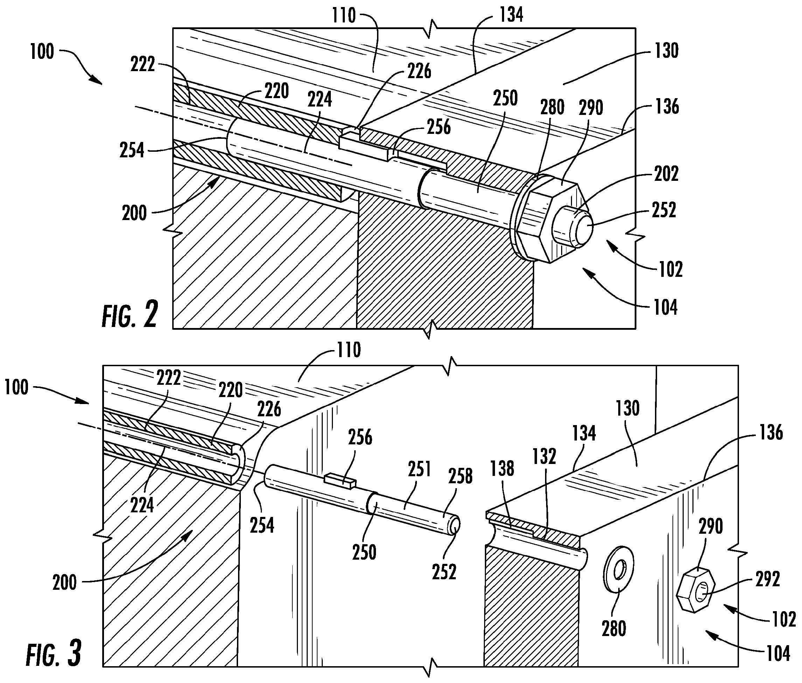

Referring now to FIGS. 2 and 3, with continued reference to FIG. 1, an enlarged cutaway view of the compliant assembly 200 at one corner 104 of the fuel cell assembly 100 is illustrated, in accordance with an embodiment of the present disclosure. FIG. 2 is an assembled cut-away view of the compliant assembly 200 and FIG. 3 is an exploded view of the compliant assembly 200. It is understood that while the first end plate 130 is illustrated and described in relation to FIGS. 2 and 3, the embodiments disclosed herein are equally applicable to the second end plate 140. Further, it is understood that while the first end 202 is illustrated and described in relation to FIGS. 2 and 3, the embodiments disclosed herein are equally applicable to the second end plate 140.

The compliant assembly 200 includes a rod 220, a connector body 250, a washer 280, and a nut 290. The rod 220 may be cylindrical in shape, tubular in shape, or have any polygon shape, as illustrated in FIGS. 2 and 3. The rod 220 can be hollow or solid. The rod 220 includes a passageway 222 formed therein. The passageway 222 may extend completely through the rod 220 from a first rod end 226 to a second rod end 228. The passageway 222 may not extend completely through the rod 220 from a first rod end 226 to a second rod end 228 but rather may have a limited depth from the first rod end the 226 and the second rod end 228. In other words, the passageway 222 may extend only partially into the rod 220 from the first rod end 226 and/or the second rod end 228. The passageway 222 may extend along a central longitudinal axis 224.

The first end plate 130 includes a through-passage 132 formed therein. The through-passage 132 extending completely through the first end plate 130, as illustrated in FIGS. 2 and 3. The first end plate 130 includes an inward side 134 and an outward side 136 located opposite the inward side 134. The through-passage 132 extends from the inward side 134 to the outward side 136. The through-passage 132 may be predominately cylindrical in shape with the exception of a slot 138. The through-passage 132 includes one or more slots 138. Multiple slots 138 may form a spline or any other interlocking shape to prevent the connector body 250 from rotating, as discussed further herein.

The connector body 250 includes a first connector end 252, a second connector end 254 located opposite of the first connector end 252, a key or flange 256 located between the first connector end 252 and the second connector end 254, and external threads 258 located at or proximate the first connector end 252. The nut 290 is located proximate the outward side 136 of the first end plate 130. The nut 290 includes internal threads 292 configured to interlock with the external threads 258 of the rod 220.

The connector body 250 is predominately cylindrical in shape with the exception of the flange 256. The flange 256 extends away from the cylindrical portion 251 of the connector body 250.

The slot 138 of the through-passage 132 is configured to interlock with the flange 256 when the connector body 250 is inserted into the through-passage 132. The flange 256 is considered an anti-rotation feature that is configured to prevent rotation of the connector body 250 relative to the first end plate 130. The flange 256 or anti-rotation feature may have any shape or geometry. The anti-rotation feature is configured to prevent rotation of the connector body 250 relative to the first end plate 130 by interlocking with the first end plate 130.

The flange 256 is configured to prevent rotation of the connector body 250 by interlocking with the slot 138. The slot 138 may be located at the inward side 134 and extends into the first end plate 130. The slot 138 extends radially outward from the through-passage 132 and into the first end plate 130.

The connector body 250 may be secured to the rod 220. The connector body 250 may be attached to the passageway 222 at or proximate the first connector end 252. The connector body 250 may be bonded to the passageway 222 at or proximate the second connector end 254 via an adhesive or an interlocking threads. The connector body 250 may be composed of a metallic material.

The first end plate 130 may slide onto the connector body 250 such that the first connector end 252 of the connector body 250 is inserted through the through-passage 132. Then the washer 280 is inserted onto the first connector end 252 and the nut 290 is tightened onto the first connector end 252. The flange 256 may interlock with the slot 138 prevents the connector body 250 from rotating when the nut 290 it tightened. The nut 290 serves as an anchoring mechanism to anchor the first end plate 130 to the fuel cell stack 110. Alternatively, another anchoring mechanism may be used that allows for the removal of the nut 290, the flange 256, and the slot 138 from the compliant assembly 200. For example, the first end plate 130 may be anchored to the fuel cell stack 110 using a locking pin slide through a hole in the connector body 250 proximate the first connector end 252. Alternatively, a crimped bushing may be utilized in place of the locking pin and hole combination.

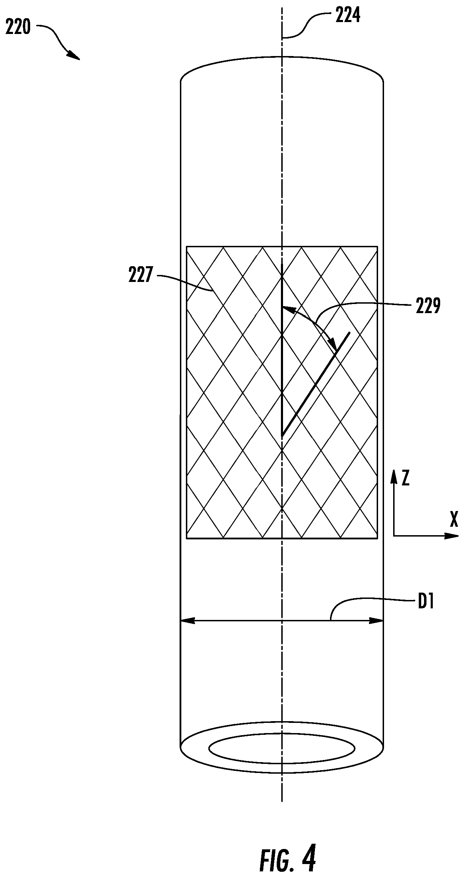

Referring now to FIG. 4, with continued reference to FIGS. 1-3, a schematic view of the braiding of the rod 220 is illustrated, in accordance with an embodiment of the present disclosure. The rod 220 is composed of a composite material that comprise a plurality of composite fibers 227. The composite fibers 227 may be impregnated by a resin or other material to fill the gaps between the composite fibers 227 and cured. The composite fibers 227 may be non-conductive or conductive. If the composite fibers are conductive, then the rod 220 may be coated with an insulation coating. The composite fiber 227 may be fiberglass or any other similar material known to one of skill in the art. If the composite fiber 227 is composed of carbon fiber, a thin insulation coating could be applied to an outer diameter of the rod 220. The rod 220 composition may be finetuned in order to achieve a desired axial compliance alone the central longitudinal axis 224 to allow for sufficient expansion and contraction of the rod 220 during expansion and contraction of the fuel cell stack 110. Aspects, such as, for example a braiding angle of the composite fiber 227, a diameter D1 of the rod 220, a number of plies of composite within the rod 220, and a matrix selection. The matrix selections also affects the stiffness of the rod 220. A matrix with a higher Young's modulus would make the rod 220 stiffer and a matrix with a lower Young's modulus would make the rod 220 less stiff.

FIG. 4 illustrates the directional braiding of the composite fibers 227 and the braiding angle 229. The braiding angle 229 may be an angle of the composite fibers 227 relative to the central longitudinal axis 224. The composite material may be composed of a plurality of composite fibers 227. The plurality of composite fibers 227 may have a braiding angle 229 that is non-perpendicular and non-parallel to a central longitudinal axis 224 of the rod 220.

If the composite fibers 227 are oriented parallel to the central longitudinal axis 224, then the composite fibers 227 are at maximum tensile strength and the rod 220 will have a minimum amount of axial compliance during expansion and contraction of the fuel cell stack 110. If the composite fibers 227 are oriented at a ninety-degree angle relative to the central longitudinal axis 224, then the composite fibers 227 are at minimum tensile strength and the rod 220 will have a maximum amount of axial compliance during expansion and contraction of the fuel cell stack 110. Therefore, the desired amount of axial compliance for the rod 220 may be finetuned by using a desired braiding angle 229 somewhere between about zero degrees and ninety degrees. The rod 220 may be composed of multiple different ply layers of the composite fibers 227 and each ply layer may have a different or a similar braiding angle 229 to the other ply layers in the rod 220 to achieve the overall desired stiffness of the rod 220. The ply layers may each switch between negative and positive braiding angles 229.

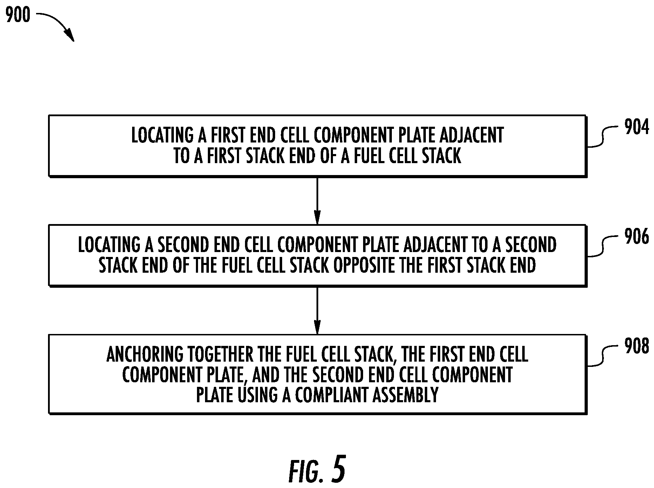

Referring now to FIG. 5, with continued reference to FIGS 1-4, a flow chart of a method 900 of manufacturing a fuel cell assembly 100 is illustrated, in accordance with an embodiment of the disclosure.

At block 904, a first end plate 130 is placed or located adjacent to a first stack end 112 of a fuel cell stack 110.

At block 906, a second end plate 140 is placed or located adjacent to a second stack end 114 of the fuel cell stack 110 opposite the first stack end 112. The fuel cell stack 110 being interposed between the first end plate 130 and the second end plate 140.

At block 908, the fuel cell stack 110, the first end plate 130, and the second end plate 140 are anchored together using one or more compliant assemblies 200. The compliant assembly 200 extends from a first end 202 to a second end 204 located opposite the first end 202. The first end 202 is located proximate or at the first end plate 130 and the second end 204 being located proximate or at the second end plate 140. The compliant assembly 200 is composed of a rod 220 extending from a first rod end 226 to a second rod end 228 located opposite the first rod end 226. The first rod end 226 is located proximate or at the first stack end 112 and the second rod end 228 is located proximate or at the second stack end 114. The compliant assembly also includes a connector body 250 secured to the rod 220 at or proximate the first rod end 226 and an anchoring mechanism secured to the connector body 250. The anchoring mechanism is configured to anchor the first end plate 130 to the fuel cell stack 110.

The method 900 also includes that the connector body 250 is secured to the rod 220. The connector body 250 includes a first connector end 252 and a second connector end 254 located opposite the first connector end 252. The connector body 250 is secured to the rod 220 at or proximate the second connector end 254 of the connector body 250.

The method 900 further includes that the first end plate 130 is slid onto the connector body 250 such that the first connector end 252 of the connector body 250 is inserted through a through-passage 132 of the first end plate 130.

The method 900 yet further includes that a nut 290 is rotated onto external threads 258 of the connector body 250 located at or proximate the first connector end 252 of the connector body 250. The nut 290 includes internal threads 292 configured to interlock with the external threads 258 of the connector body 250.

The method 900 yet also includes that a flange 256 of the connector body 250 is aligned with a slot 138 of the through-passage 132 of the first end plate 130. This may occur prior to or simultaneously with sliding the first end plate 130 onto the connector body 250. The flange 256 is configured to interlock with the slot 138 to prevent rotation of the connector body 250 relative to the first end plate 130.

The method 900 may still further include that the rod 220 is formed from a composite material that comprises a plurality of composite fibers 227 having a braiding angle 229 that is non-perpendicular and non-parallel to a central longitudinal axis 224 of the rod 220.

Technical effects and benefits of the features described herein include anchoring together a fuel cell assembly using a composite rod that expands and contacts with the fuel cell stack and an anchoring mechanism operably connected to the composite rod.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fuel cell assembly (100), comprising:
a fuel cell stack (110) having a first stack end (112) and a second stack end (114) located opposite the first stack end (112);
a first end plate (130) located at the first stack end (112);
a second end plate (140) located at the second stack end (114), the fuel cell stack (110) being interposed between the first end plate (130) and the second end plate (140);
an assembly (200) extending from a first end to a second end located opposite the first end, the first end being located proximate or at the first end plate (130) and the second end being located proximate or at the second end plate (140), wherein the assembly (200) is configured to anchor together the fuel cell stack (110), the first end plate (130), and the second end plate (140), and
wherein the assembly (200) comprises:
a rod (220) extending from a first rod end (226) to a second rod end (228) located opposite the first rod end (226), the first rod end (226) being located proximate or at the first stack end (112) and the second rod end (228) being located proximate or at the second stack end (114);
a connector body (250) secured to the rod (220) at or proximate the first rod end (226); and
an anchoring mechanism (290) secured to the connector body (250), the anchoring mechanism (290) being configured to anchor the first end plate (130) to the fuel cell stack (110), and
wherein:
the first end plate (130) further comprises an inward side (134); an outward side (136) located opposite the inward side (134); a through-passage (132) extending completely through the first end plate (130) from the inward side (134) to the outward side (136);
the connector body (250) extends through the through-passage (132) of the first end plate (130);
the connector body (250) further comprises a first connector end (252), a second connector end (254) located opposite the first connector end (252), and external threads (258) located at or proximate the first connector end (252);
the anchoring mechanism (290) is a nut having internal threads (292) configured to interlock with the external threads 258 of the connector body (250), the nut being located proximate the outward side (136) of the first end plate (130); and
the connector body (250) further comprises an anti-rotation mechanism configured to prevent rotation of the connector body (250) relative to the first end plate (130);
the anti-rotation mechanism is configured to prevent rotation of the connector body (250) relative to the first end plate (130) by interlocking with the first end plate (130);
the anti-rotation mechanism is a flange (256) extending away from the connector body (250); the through-passage (132) further includes a slot (138) extending radially outward from the through-passage (132) and into the first end plate (130); the flange (256) is configured to interlock with the slot (138);
the slot (138) is located at the inward side (134) of the first end plate (130) and extends into the first end plate (130).

2. The fuel cell assembly (100) of claim 1, wherein the rod (220) is configured to expand with expansion of the fuel cell stack (110) and contract with contraction of the fuel cell stack (110).

3. The fuel cell assembly (100) of claim 1 or 2, wherein the rod (220) is composed of a material that is configured to expand with expansion of the fuel cell stack (110) and contract with contraction of the fuel cell stack (110).

4. The fuel cell assembly (100) of claim 2 or 3, wherein the rod (220) is composed of a composite material that comprises a plurality of composite fibers (227).

5. The fuel cell assembly (100) of claim 4, wherein the plurality of composite fibers (227) have a braiding angle that is non-perpendicular and non-parallel to a central longitudinal axis of the rod (220).

6. The fuel cell assembly (100) of any preceding claim, wherein the rod (220) has a passageway (222) formed therein, and wherein the connector body (250) is secured to the passageway (222) of the rod (220).

7. The fuel cell assembly (100) of any preceding claim, wherein the assembly (200) comprises:
a second connector body secured to the rod (220) at or proximate the second rod end (228); and
a second anchoring mechanism secured to the second connector body, the second anchoring mechanism being configured to anchor the second end plate (140) to the fuel cell stack (110).

8. A method of manufacturing a fuel cell assembly (100), the method comprising:
locating a first end plate (130) adjacent to a first stack end (112) of a fuel cell stack (110);
locating a second end plate (140) adjacent to a second stack end (114) of the fuel cell stack (110) opposite the first stack end (112), the fuel cell stack (110) being interposed between the first end plate (130) and the second end plate (140);
anchoring together the fuel cell stack (110), the first end plate (130), and the second end plate (140) using an assembly (200), the assembly (200) extending from a first end to a second end located opposite the first end, wherein the first end is located proximate or at the first end plate (130) and the second end being located proximate or at the second end plate (140), and wherein the assembly (200) comprises:
a rod (220) extending from a first rod end (226) to a second rod end (228) located opposite the first rod end (226), the first rod end (226) being located proximate or at the first stack end (112) and the second rod (228) end being located proximate or at the second stack end (114);
a connector body (250) secured to the rod (220) at or proximate the first rod end (226); and
an anchoring mechanism (290) secured to the connector body (250), the anchoring mechanism (290) being configured to anchor the first end plate (130) to the fuel cell stack (110);
securing the connector body (250) to the rod (220), the connector body (250) comprising a first connector end (252) and a second connector end (254) located opposite the first connector end (252), wherein the connector body (250) is secured to the rod (220) at or proximate the second connector end (254) of the connector body (250);
sliding the first end plate (130) onto the connector body (250) such that the first connector end (252) of the connector body (250) is inserted through a through-passage (132) of the first end plate (130);
rotating a nut onto external threads (258) of the connector body (250) located at or proximate the first connector end (252) of the connector body (250), the nut comprising internal threads (292) configured to interlock with the external threads (258) of the connector body (250);
aligning a flange (256) of the connector body (250) with a slot (138) of the through-passage (132) of the first end plate (130), the flange (256) being configured to interlock with the slot (138) to prevent rotation of the connector body (250) relative to the first end plate (130).

9. The method of claim 8, further comprising:
forming the rod (220) from a composite material, the composite material comprising a plurality of composite fibers (227) having a braiding angle that is non-perpendicular and non-parallel to a central longitudinal axis of the rod (220).

## Patentansprüche

1. Brennstoffzellenanordnung (100), umfassend:
einen Brennstoffzellenstapel (110) mit einem ersten Stapelende (112) und einem zweiten Stapelende (114), das dem ersten Stapelende (112) gegenüberliegt;
eine erste Endplatte (130), die an dem ersten Stapelende (112) lokalisiert ist;
eine zweite Endplatte (140), die an dem zweiten Stapelende (114) lokalisiert ist, wobei der Brennstoffzellenstapel (110) zwischen der ersten Endplatte (130) und der zweiten Endplatte (140) angeordnet ist;
eine Anordnung (200), die sich von einem ersten Ende zu einem zweiten Ende erstreckt, das dem ersten Ende gegenüberliegt, wobei das erste Ende nahe oder an der ersten Endplatte (130) lokalisiert ist und das zweite Ende nahe oder an der zweiten Endplatte (140) lokalisiert ist, wobei die Anordnung (200) konfiguriert ist, um den Brennstoffzellenstapel (110), die erste Endplatte (130) und die zweite Endplatte (140) zusammen zu verankern, und
wobei die Anordnung (200) umfasst:
einen Stab (220), der sich von einem ersten Stabende (226) zu einem zweiten Stabende (228) erstreckt, das dem ersten Stabende (226) gegenüberliegt, wobei das erste Stabende (226) nahe oder an dem ersten Stapelende (112) lokalisiert ist und das zweite Stabende (228) nahe oder an dem zweiten Stapelende (114) lokalisiert ist;
einen Verbinderkörper (250), der an dem Stab (220) an oder nahe dem ersten Stabende (226) gesichert ist; und
einen Verankerungsmechanismus (290), der an dem Verbinderkörper (250) gesichert ist, wobei der Verankerungsmechanismus (290) konfiguriert ist, um die erste Endplatte (130) an dem Brennstoffzellenstapel (110) zu verankern, und
wobei:
die erste Endplatte (130) ferner umfasst: eine Einwärtsseite (134); eine Auswärtsseite (136), die der Einwärtsseite (134) gegenüberliegt; einen Durchgang (132), der sich vollständig durch die erste Endplatte (130) von der Einwärtsseite (134) zu der Auswärtsseite (136) erstreckt;
der Verbinderkörper (250) sich durch den Durchgang (132) der ersten Endplatte (130) erstreckt;
der Verbinderkörper (250) ferner ein erstes Verbinderende (252), ein zweites Verbinderende (254), das dem ersten Verbinderende (252) gegenüberliegt, und Außengewinde (258), die an oder nahe dem ersten Verbinderende (252) lokalisiert sind, umfasst;
der Verankerungsmechanismus (290) eine Mutter mit Innengewinden (292) ist, die konfiguriert sind, um mit den Außengewinden (258) des Verbinderkörpers (250) ineinanderzugreifen, wobei die Mutter nahe der Auswärtsseite (136) der ersten Endplatte (130) lokalisiert ist; und
der Verbinderkörper (250) ferner einen Verdrehsicherungsmechanismus umfasst, der konfiguriert ist, um Rotation des Verbinderkörpers (250) relativ zu der ersten Endplatte (130) zu verhindern;
der Verdrehsicherungsmechanismus konfiguriert ist, um Rotation des Verbinderkörpers (250) relativ zu der ersten Endplatte (130) durch Ineinandergreifen mit der ersten Endplatte (130) zu verhindern;
der Verdrehsicherungsmechanismus ein Flansch (256) ist, der sich von dem Verbinderkörper (250) weg erstreckt; der Durchgang (132) ferner einen Schlitz (138) beinhaltet, der sich von dem Durchgang (132) radial nach außen und in die erste Endplatte (130) erstreckt; der Flansch (256) konfiguriert ist, um mit dem Schlitz (138) ineinanderzugreifen;
der Schlitz (138) an der Einwärtsseite (134) der ersten Endplatte (130) lokalisiert ist und sich in die erste Endplatte (130) erstreckt.

2. Brennstoffzellenanordnung (100) nach Anspruch 1, wobei der Stab (220) konfiguriert ist, um sich mit Expansion des Brennstoffzellenstapels (110) auszudehnen und sich mit Kontraktion des Brennstoffzellenstapels (110) zusammenzuziehen.

3. Brennstoffzellenanordnung (100) nach Anspruch 1 oder 2, wobei der Stab (220) aus einem Material zusammengesetzt ist, das konfiguriert ist, um sich mit Expansion des Brennstoffzellenstapels (110) auszudehnen und sich mit Kontraktion des Brennstoffzellenstapels (110) zusammenzuziehen.

4. Brennstoffzellenanordnung (100) nach Anspruch 2 oder 3, wobei der Stab (220) aus einem Verbundmaterial zusammengesetzt ist, das eine Vielzahl von Verbundfasern (227) umfasst.

5. Brennstoffzellenanordnung (100) nach Anspruch 4, wobei die Vielzahl von Verbundfasern (227) einen Flechtwinkel aufweist, der nichtsenkrecht und nichtparallel zu einer zentralen Längsachse des Stabs (220) ist.

6. Brennstoffzellenanordnung (100) nach einem der vorangehenden Ansprüche, wobei der Stab (220) einen darin gebildeten Durchgang (222) aufweist, und wobei der Verbinderkörper (250) an dem Durchgang (222) des Stabs (220) gesichert ist.

7. Brennstoffzellenanordnung (100) nach einem der vorangehenden Ansprüche, wobei die Anordnung (200) umfasst:
einen zweiten Verbinderkörper, der an dem Stab (220) an oder nahe dem zweiten Stabende (228) gesichert ist; und
einen zweiten Verankerungsmechanismus, der an dem zweiten Verbinderkörper gesichert ist, wobei der zweite Verankerungsmechanismus konfiguriert ist, um die zweite Endplatte (140) an dem Brennstoffzellenstapel (110) zu verankern.

8. Verfahren zum Herstellen einer Brennstoffzellenanordnung (100), wobei das Verfahren umfasst:
Lokalisieren einer ersten Endplatte (130) benachbart zu einem ersten Stapelende (112) eines Brennstoffzellenstapels (110);
Lokalisieren einer zweiten Endplatte (140) benachbart zu einem zweiten Stapelende (114) des Brennstoffzellenstapels (110) gegenüber dem ersten Stapelende (112), wobei der Brennstoffzellenstapel (110) zwischen der ersten Endplatte (130) und der zweiten Endplatte (140) angeordnet ist;
Zusammenverankern des Brennstoffzellenstapels (110), der ersten Endplatte (130) und der zweiten Endplatte (140) unter Verwendung einer Anordnung (200), wobei sich die Anordnung (200) von einem ersten Ende zu einem zweiten Ende erstreckt, das dem ersten Ende gegenüberliegt, wobei das erste Ende nahe oder an der ersten Endplatte (130) lokalisiert ist und das zweite Ende nahe oder an der zweiten Endplatte (140) lokalisiert ist, und wobei die Anordnung (200) umfasst:
einen Stab (220), der sich von einem ersten Stabende (226) zu einem zweiten Stabende (228) erstreckt, das dem ersten Stabende (226) gegenüberliegt, wobei das erste Stabende (226) nahe oder an dem ersten Stapelende (112) lokalisiert ist und das zweite Stabende (228) nahe oder an dem zweiten Stapelende (114) lokalisiert ist;
einen Verbinderkörper (250), der an dem Stab (220) an oder nahe dem ersten Stabende (226) gesichert ist; und
einen Verankerungsmechanismus (290), der an dem Verbinderkörper (250) gesichert ist, wobei der Verankerungsmechanismus (290) konfiguriert ist, um die erste Endplatte (130) an dem Brennstoffzellenstapel (110) zu verankern;
Sichern des Verbinderkörpers (250) an dem Stab (220), wobei der Verbinderkörper (250) ein erstes Verbinderende (252) und ein zweites Verbinderende (254) umfasst, das dem ersten Verbinderende (252) gegenüberliegt, wobei der Verbinderkörper (250) an dem Stab (220) an oder nahe dem zweiten Verbinderende (254) des Verbinderkörpers (250) gesichert ist;
Schieben der ersten Endplatte (130) auf den Verbinderkörper (250), sodass das erste Verbinderende (252) des Verbinderkörpers (250) durch einen Durchgang (132) der ersten Endplatte (130) eingeführt wird;
Drehen einer Mutter auf Außengewinde (258) des Verbinderkörpers (250), die an oder nahe dem ersten Verbinderende (252) des Verbinderkörpers (250) lokalisiert sind, wobei die Mutter Innengewinde (292) umfasst, die konfiguriert sind, um mit den Außengewinden (258) des Verbinderkörpers (250) ineinanderzugreifen;
Ausrichten eines Flansches (256) des Verbinderkörpers (250) mit einem Schlitz (138) des Durchgangs (132) der ersten Endplatte (130), wobei der Flansch (256) konfiguriert ist, um mit dem Schlitz (138) ineinanderzugreifen, um Rotation des Verbinderkörpers (250) relativ zu der ersten Endplatte (130) zu verhindern.

9. Verfahren nach Anspruch 8, ferner umfassend:
Bilden des Stabs (220) aus einem Verbundmaterial, wobei das Verbundmaterial eine Vielzahl von Verbundfasern (227) umfasst, die einen Flechtwinkel aufweisen, der nichtsenkrecht und nichtparallel zu einer zentralen Längsachse des Stabs (220) ist.

## Revendications

1. Ensemble pile à combustible (100), comprenant :
un empilement de piles à combustible (110) ayant une première extrémité d'empilement (112) et une seconde extrémité d'empilement (114) située à l'opposé de la première extrémité d'empilement (112) ;
une première plaque d'extrémité (130) située au niveau de la première extrémité d'empilement (112) ;
une seconde plaque d'extrémité (140) située au niveau de la seconde extrémité d'empilement (114), l'empilement de piles à combustible (110) étant interposé entre la première plaque d'extrémité (130) et la seconde plaque d'extrémité (140) ;
un ensemble (200) se prolongeant d'une première extrémité à une seconde extrémité située à l'opposé de la première extrémité, la première extrémité étant située à proximité ou au niveau de la première plaque d'extrémité (130) et la seconde extrémité étant située à proximité ou au niveau de la seconde plaque d'extrémité (140), dans lequel l'ensemble (200) est configuré pour ancrer ensemble l'empilement de piles à combustible (110), la première plaque d'extrémité (130) et la seconde plaque d'extrémité (140), et
dans lequel l'ensemble (200) comprend :
une tige (220) se prolongeant d'une première extrémité de tige (226) à une seconde extrémité de tige (228) située à l'opposé de la première extrémité de tige (226), la première extrémité de tige (226) étant située à proximité ou au niveau de la première extrémité d'empilement (112) et la seconde extrémité de tige (228) étant située à proximité ou au niveau de la seconde extrémité d'empilement (114) ;
un corps de connecteur (250) fixé à la tige (220) au niveau ou à proximité de la première extrémité de tige (226) ; et
un mécanisme d'ancrage (290) fixé au corps de connecteur (250), le mécanisme d'ancrage (290) étant configuré pour ancrer la première plaque d'extrémité (130) à l'empilement de piles à combustible (110), et
dans lequel :
la première plaque d'extrémité (130) comprend également un côté intérieur (134) ; un côté extérieur (136) situé à l'opposé du côté intérieur (134) ; un passage traversant (132) se prolongeant complètement à travers la première plaque d'extrémité (130) du côté intérieur (134) au côté extérieur (136) ;
le corps de connecteur (250) se prolonge à travers le passage traversant (132) de la première plaque d'extrémité (130) ;
le corps de connecteur (250) comprend également une première extrémité de connecteur (252), une seconde extrémité de connecteur (254) située à l'opposé de la première extrémité de connecteur (252), et des filetages externes (258) situés au niveau ou à proximité de la première extrémité de connecteur (252) ;
le mécanisme d'ancrage (290) est un écrou ayant des filetages internes (292) configurés pour s'emboîter avec les filetages externes 258 du corps de connecteur (250), l'écrou étant situé à proximité du côté extérieur (136) de la première plaque d'extrémité (130) ; et
le corps de connecteur (250) comprend également un mécanisme anti-rotation configuré pour empêcher la rotation du corps de connecteur (250) par rapport à la première plaque d'extrémité (130) ;
le mécanisme anti-rotation est configuré pour empêcher la rotation du corps de connecteur (250) par rapport à la première plaque d'extrémité (130) en s'emboîtant avec la première plaque d'extrémité (130) ;
le mécanisme anti-rotation est une bride (256) se prolongeant à l'écart du corps de connecteur (250) ; le passage traversant (132) comporte également une fente (138) se prolongeant radialement vers l'extérieur à partir du passage traversant (132) et dans la première plaque d'extrémité (130) ; la bride (256) est configurée pour s'emboîter avec la fente (138) ;
la fente (138) est située au niveau du côté intérieur (134) de la première plaque d'extrémité (130) et se prolonge dans la première plaque d'extrémité (130).

2. Ensemble pile à combustible (100) selon la revendication 1, dans lequel la tige (220) est configurée pour se dilater avec la dilatation de l'empilement de piles à combustible (110) et se contracter avec la contraction de l'empilement de piles à combustible (110).

3. Ensemble pile à combustible (100) selon la revendication 1 ou 2, dans lequel la tige (220) est composée d'un matériau qui est configuré pour se dilater avec la dilatation de l'empilement de piles à combustible (110) et se contracter avec la contraction de l'empilement de piles à combustible (110).

4. Ensemble pile à combustible (100) selon la revendication 2 ou 3, dans lequel la tige (220) est composée d'un matériau composite qui comprend une pluralité de fibres composites (227).

5. Ensemble pile à combustible (100) selon la revendication 4, dans lequel la pluralité de fibres composites (227) ont un angle de tressage qui n'est ni perpendiculaire ni parallèle à un axe longitudinal central de la tige (220).

6. Ensemble pile à combustible (100) selon une quelconque revendication précédente, dans lequel la tige (220) a un passage (222) formé à l'intérieur, et dans lequel le corps de connecteur (250) est fixé au passage (222) de la tige (220).

7. Ensemble pile à combustible (100) selon une quelconque revendication précédente, dans lequel l'ensemble (200) comprend :
un second corps de connecteur fixé à la tige (220) au niveau ou à proximité de la seconde extrémité de tige (228) ; et
un second mécanisme d'ancrage fixé au second corps de connecteur, le second mécanisme d'ancrage étant configuré pour ancrer la seconde plaque d'extrémité (140) à la pile à combustible (110).

8. Procédé de fabrication d'un ensemble pile à combustible (100), le procédé comprenant :
l'emplacement d'une première plaque d'extrémité (130) adjacente à une première extrémité d'empilement (112) d'un empilement de piles à combustible (110) ;
l'emplacement d'une seconde plaque d'extrémité (140) adjacente à une seconde extrémité d'empilement (114) de l'empilement de piles à combustible (110) à l'opposé de la première extrémité d'empilement (112), l'empilement de piles à combustible (110) étant interposé entre la première plaque d'extrémité (130) et la seconde plaque d'extrémité (140) ;
l'ancrage ensemble de l'empilement de piles à combustible (110), de la première plaque d'extrémité (130) et de la seconde plaque d'extrémité (140) à l'aide d'un ensemble (200), l'ensemble (200) se prolongeant d'une première extrémité à une seconde extrémité située à l'opposé de la première extrémité, dans lequel la première extrémité est située à proximité ou au niveau de la première plaque d'extrémité (130) et la seconde extrémité étant située à proximité ou au niveau de la seconde plaque d'extrémité (140), dans lequel l'ensemble (200) comprend :
une tige (220) se prolongeant d'une première extrémité de tige (226) à une seconde extrémité de tige (228) située à l'opposé de la première extrémité de tige (226), la première extrémité de tige (226) étant située à proximité ou au niveau de la première extrémité d'empilement (112) et la seconde extrémité de tige (228) étant située à proximité ou au niveau de la seconde extrémité d'empilement (114) ;
un corps de connecteur (250) fixé à la tige (220) au niveau ou à proximité de la première extrémité de tige (226) ; et
un mécanisme d'ancrage (290) fixé au corps de connecteur (250), le mécanisme d'ancrage (290) étant configuré pour ancrer la première plaque d'extrémité (130) à l'empilement de piles à combustible (110) ;
la fixation du corps de connecteur (250) à la tige (220), le corps de connecteur (250) comprenant une première extrémité de connecteur (252) et une seconde extrémité de connecteur (254) située à l'opposé de la première extrémité de connecteur (252), dans lequel le corps de connecteur (250) est fixé à la tige (220) au niveau ou à proximité de la seconde extrémité de connecteur (254) du corps de connecteur (250) ;
le glissement de la première plaque d'extrémité (130) sur le corps de connecteur (250) de sorte que la première extrémité de connecteur (252) du corps de connecteur (250) est insérée à travers un passage traversant (132) de la première plaque d'extrémité (130) ;
la rotation d'un écrou sur les filetages externes (258) du corps de connecteur (250) situés au niveau ou à proximité de la première extrémité de connecteur (252) du corps de connecteur (250), l'écrou comprenant des filetages internes (292) configurés pour s'emboîter avec les filetages externes (258) du corps de connecteur (250) ;
l'alignement d'une bride (256) du corps de connecteur (250) avec une fente (138) du passage traversant (132) de la première plaque d'extrémité (130), la bride (256) étant configurée pour s'emboîter avec la fente (138) pour empêcher la rotation du corps de connecteur (250) par rapport à la première plaque d'extrémité (130).

9. Procédé selon la revendication 8, comprenant également :
la formation de la tige (220) à partir d'un matériau composite, le matériau composite comprenant une pluralité de fibres composites (227) ayant un angle de tressage qui n'est ni perpendiculaire ni parallèle à un axe longitudinal central de la tige (220).
